(19) **Europäisches Patentamt**
**European Patent Office**
**Office européen des brevets**

(11) **EP 4 741 953 A1**

(12) **EUROPÄISCHE PATENTANMELDUNG**

(43) Veröffentlichungstag:
13.05.2026 Patentblatt 2026/20

(21) Anmeldenummer: 25213058.8

(22) Anmeldetag: 03.11.2025

(51) Internationale Patentklassifikation (IPC):
G05B 11/06 (2006.01)　　G05B 13/04 (2006.01)
G05D 16/20 (2006.01)　　F15B 21/08 (2006.01)

(52) Gemeinsame Patentklassifikation (CPC):
G05B 11/06; G05B 13/041; G05B 13/048;
G05D 16/202; F15B 21/087; F15B 2211/205;
F15B 2211/6309; F15B 2211/6313; F15B 2211/665;
F15B 2211/6656; G05B 2219/41273;
G05B 2219/41307; G05B 2219/41309;
G05B 2219/41318

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 08.11.2024 DE 102024210751

(71) Anmelder: Robert Bosch GmbH
70442 Stuttgart (DE)

(72) Erfinder:
• Rose, Steffen
74366 Kirchheim Am Neckar (DE)
• Wiedmer, Fabian
88527 Unlingen-Goeffingen (DE)
• Neyer, Daniel
70195 Stuttgart (DE)
• Hoffmann, Dominik Thomas
56220 Urmitz (DE)

(54) **VERFAHREN ZUR BESTIMMUNG VON STELLWERTEN EINER STELLGRÖSSE FÜR EIN DRUCKMITTELVERSORGUNGSSYSTEM EINES HYDRAULISCHEN SYSTEMS**

(57) Die Erfindung betrifft ein Verfahren zur Bestimmung von Stellwerten einer Stellgröße für ein Druckmittelversorgungssystem eines hydraulischen Systems mit wenigstens einem hydraulischen Verbraucher (10), wobei das Druckmittelversorgungssystem eine Hydraulikmaschine (2) und einen damit gekoppelten elektrischen Antrieb (4, 6) aufweist und mit der Stellgröße angesteuert wird, wobei ein inverses Streckenmodell (47) für das hydraulische System gegeben ist, das Werte einer zu regelnden Zustandsgröße des hydraulischen Systems und von zeitlichen Ableitungen der Zustandsgröße bis zu einer vorbestimmten Maximalordnung als Eingangswerte verwendet und diese auf einen Ausgangswert für die Stellgröße abbildet; umfassend Bestimmen (110) von Trajektorienwerten (36) einer Trajektorie für den zeitlichen Verlauf der Zustandsgröße und von Ableitungswerten (38, 40) für zeitliche Ableitungen des Verlaufs der Zustandsgröße bis zu der Maximalordnung aus vorgegebenen Sollwerten (32) für die Zustandsgröße; Bestimmen (120) von Kompensationswerten (73) mit einem Kompensationsregler (75) aus einer Regelabweichung (61) zwischen den Trajektorienwerten (36) und Istwerten (54) der Zustandsgröße; und Bestimmen (130) von Stellwerten (50) für die Stellgröße unter Verwendung des inversen Streckenmodells (47) aus den Trajektorienwerten (36), den Ableitungswerten (38, 40) und den Kompensationswerten (73).

Fig. 3

**Beschreibung**

Die vorliegende Erfindung betrifft ein Verfahren zur Bestimmung von Stellwerten einer Stellgröße für ein Druckmittelversorgungssystem eines hydraulischen Systems sowie eine Recheneinheit und ein Computerprogramm zu dessen Durchführung und ein hydraulisches System.

Hintergrund der Erfindung

Maschinen, insbesondere mobile Arbeitsmaschinen (z.B. Bagger), können eine Arbeitshydraulik, d.h. ein hydraulisches System, aufweisen, um mittels hydraulischer Verbraucher (z.B. Hydraulikzylindern und/oder Hydraulikmotoren) die Bewegung von Elementen (z.B. Auslegerelemente) zu bewirken. Eine Möglichkeit, den Einsatz der Arbeitshydraulik effizienter zu gestalten, ist die Bereitstellung eines bedarfsgerechten Volumenstroms, beispielsweise durch Verwendung einer Verstellpumpe, d.h. einer hydraulischen Pumpe mit variablem Schluckvolumen, die jedoch typischerweise relativ teuer im Vergleich zum zu Konstantpumpen sind. Bei hydraulischen Systemen, die eine hydraulische Konstantpumpe aufweisen, die durch eine elektrische Maschine angetrieben wird, kann dazu die Drehzahl der Konstantpumpe bzw. der elektrischen Maschine variiert werden, um den geförderten Volumenstrom zu variieren. Um in mobilen Anwendungen eingesetzte Hydrauliksysteme zur Steuerung der Arbeitsausrüstung mit dem gewünschten Volumenstrom versorgen zu können, sind verschiedene Regelungskonzepte möglich. So wird in volumenstromeinprägenden Systemen wie EFM (EFM: Electro-hydraulic Flow Matching) eine Volumenstrom- bzw. Drehzahlregelung verwendet. In Systemen, deren Systeme deren Regelung auf einer Druck- bzw. Druckdifferenz basiert, wie z.B. LS- und LUDV-Systeme (LS: Load-Sensing, LUDV: Lastdruckunabhängige Durchflussverteilung), wird eine Druckregelung verwendet.

Offenbarung der Erfindung

Erfindungsgemäß werden ein Verfahren zur Bestimmung von Stellwerten einer Stellgröße für ein Druckmittelversorgungssystem eines hydraulischen Systems (bzw. elektro-hydraulischen Systems) sowie eine Recheneinheit und ein Computerprogramm zu dessen Durchführung und ein hydraulisches System mit den Merkmalen der unabhängigen Patentansprüche vorgeschlagen. Vorteilhafte Ausgestaltungen sind Gegenstand der Unteransprüche sowie der nachfolgenden Beschreibung.

In dem Verfahren zur Bestimmung von Stellwerten einer Stellgröße für ein Druckmittelversorgungssystem eines hydraulischen Systems wird ein inverses Streckenmodell für das hydraulische System verwendet, das Werte einer zu regelnden Zustandsgröße des hydraulischen Systems und von zeitlichen Ableitungen der Zustandsgröße bis zu einer vorbestimmten Maximalordnung als Eingangswerte verwendet und diese auf einen Ausgangswert für die Stellgröße abbildet. Das Verfahren umfasst ein Bestimmen von Trajektorienwerten einer Trajektorie für den zeitlichen Verlauf der Zustandsgröße und von Ableitungswerten für zeitliche Ableitungen des Verlaufs der Zustandsgröße bis zu der Maximalordnung aus vorgegebenen Sollwerten für die Zustandsgröße, ein Bestimmen von Kompensationswerten mit einem Kompensationsregler aus einer Regelabweichung zwischen den Trajektorienwerten und Istwerten der Zustandsgröße und ein Bestimmen von Stellwerten für die Stellgröße unter Verwendung des inversen Streckenmodells aus den Trajektorienwerten, den Ableitungswerten und den Kompensationswerten. Durch die Bestimmung der Trajektorie für die Zustandsgröße und die Verwendung des inversen Streckenmodells wird eine Vorsteuerung mit geringen Abweichungen ermöglicht, wobei insbesondere unerwünschte Unstetigkeiten in der geregelten Zustandsgröße verringert werden, die etwa auftreten können, wenn die Stellwerte direkt aus den vorgegebenen Sollwerten bestimmt werden (etwa mit einem einzelnen Regler).

Die Stellgröße ist beispielsweise ein vom elektrischen Antrieb aufzubringendes Drehmoment oder eine Drehzahl des elektrischen Antriebs. Die Zustandsgröße ist beispielsweise ein Druck im hydraulischen System, insbesondere ein Druck an einem Anschluss der Hydraulikmaschine oder einer mit dem Anschluss verbundenen hydraulischen Leitung bzw. einem mit dem Anschluss verbunden hydraulischen Kanal, eine Drehzahl der Hydraulikmaschine oder ein von der Hydraulikmaschine geförderter Volumenstrom an Druckmittel.

Gemäß einer Ausgestaltung werden beim Bestimmen der Stellwerte für die Stellgröße die Ableitungswerten der zeitlichen Ableitung mit der Maximalordnung durch die Kompensationswerte geändert, um geänderte Ableitungswerte zu bestimmen. Die Trajektorienwerte, die Ableitungswerte von zeitlichen Ableitungen mit einer Ordnung kleiner als die Maximalordnung und die geänderten Ableitungswerte werden als Eingangswerte des inversen Streckenmodells verwendet. Insbesondere werden die Kompensationswerte zu den Ableitungswerten der zeitlichen Ableitung mit der Maximalordnung addiert, um die geänderten Ableitungswerte zu bestimmen. Alternativ können die Kompensationswerte verwendet werden, um die Ausgangswerte des inversen Streckenmodells zu verändern (z.B. zu diesen addiert werden), wobei dann im inversen Streckenmodell die Trajektorienwerte und die Ableitungswerte (aller Ordnungen) unverändert, oder zumindest nicht durch die Kompensationswerte geändert, als Eingangsgröße verwendet werden.

Gemäß einer Ausgestaltung wird beim Bestimmen der Trajektorienwerte und der Ableitungswerte ein Filter, dessen Ordnung gleich der Maximalordnung ist, verwendet, um aus den vorgegebenen Sollwerten für die Zustandsgröße die Trajektorienwerte und die Ableitungswerte zu bestimmen. Der Filter umfasst insbesondere eine Anzahl in Reihe geschalteter PT1-Filter oder ist als solcher ausgeführt, wobei die Anzahl gleich der Maximalordnung ist. Die Verwendung eines Filters ist zweckmäßig, da so die direkte Berechnung (z.B. mittels Differenzbildung) von Ableitungen aus Messwerten, die z.B. verrauscht sind, vermieden wird.

Gemäß einer Ausgestaltung werden im inversen Streckenmodell ein oder mehrere Kennfelder für die Hydraulikmaschine verwendet. Insbesondere wird bzw. werden verwendet: ein Volumenstrom-Kennfeld, das den von der Hydraulikmaschine geförderten Volumenstrom angibt und das von einem Druck und einer Drehzahl der Hydraulikmaschine abhängig ist, und/oder ein Drehmoment-Kennfeld, welches das an der Hydraulikmaschine auftretende Drehmoment angibt und das von dem Druck und der Drehzahl der Hydraulikmaschine abhängig ist, und/oder ein oder mehrere Kennfelder für die Ableitungen des Volumenstrom-Kennfelds und/oder des Drehmoment-Kennfelds nach dem Druck oder der Drehzahl und/oder ein oder mehrere invertierte Kennfelder, die jeweils nach dem Druck oder der Drehzahl aufgelöste Inverse des Volumenstrom-Kennfelds oder des Drehmoment-Kennfelds sind. Kennfelder ermöglichen insbesondere eine Berücksichtigung von Leckage und/oder Reibung, deren Effekte sich im Allgemeinen nicht durch einfache Gleichungen ausdrücken lassen. Die Kennfelder können z.B. in einer Recheneinheit, die das Verfahren implementiert, gespeichert sein. Dabei können die Kennfelder an sich gespeichert sein, z.B. in Tabellenform, oder es kann ein auf maschinellem Lernen basierendes Modell, z.B. ein neuronales Netz, das mit dem oder den Kennfeldern trainiert wurde, verwendet werden und in der Recheneinheit gespeichert werden. Letzteres kann z.B. einen geringeren Speicherbedarf aufweisen.

Gemäß einer Ausgestaltung werden beim Bestimmen der Trajektorienwerte und der Ableitungswerte die Ableitungswerte für eine der zeitlichen Ableitungen, insbesondere für diejenige mit der Maximalordnung, nach oben und/oder unten durch jeweilige erste Beschränkungswerte beschränkt. Dadurch kann insbesondere ein Übersteuern, z.B. aufgrund eines Integral-Anteils im Kompensationsregler, bei Änderungen der vorgegebenen Sollwerte mit hoher Änderungsrate vermieden werden, so dass etwa in den Stellwerten keine Schwingungen auftreten.

Gemäß einer Ausgestaltung werden die ersten Beschränkungswerte variiert und zwar in Abhängigkeit von den Trajektorienwerten und/oder den Ableitungswerten, die nicht beschränkt werden, und/oder in Abhängigkeit vom Istwert der Stellgröße und/oder in Abhängigkeit von einem möglichen Wertebereich der Stellgröße und/oder in Abhängigkeit von durch ein Störgrößenschätzverfahren bestimmten Schätzwerten wenigstens einer Störgröße, die eine unbeobachtete oder unbeobachtbare Größe im hydraulischen System ist. Die wenigstens eine Störgröße schließt insbesondere einen Summenvolumenstrom des wenigstens einen Verbrauchers und/oder dessen zeitliche Ableitung ein. Hierdurch können tatsächlich bestehende Limitierungen, z.B. des zur Verfügung stehenden Antriebsmoments (etwa wenn das Antriebsmoment reduziert wird, um eine Überhitzung des elektrischen Antriebs zu vermeiden) oder verschiedene Betriebszustände berücksichtigt werden.

Gemäß einer Ausgestaltung werden durch ein Störgrößenschätzverfahren Schätzwerte für wenigstens eine Störgröße, die eine unbeobachtete oder unbeobachtbare Größe im hydraulischen System ist, bestimmt, wobei die Schätzwerte für die wenigstens eine Störgröße beim Bestimmen der Trajektorienwerte und der Ableitungswerte und/oder im inversen Streckenmodell verwendet werden. Die wenigstens eine Störgröße schließ insbesondere einen Summenvolumenstrom des wenigstens einen Verbrauchers und/oder dessen zeitliche Ableitung ein. Durch die Berücksichtigung der Störgröße kann die Genauigkeit, z.B. des inversen Streckenmodells, erhöht werden. Als Störgrößenschätzverfahren kann beispielsweise ein Beobachter, insbesondere einen Luenberger Beobachter, oder ein iteratives Schätzverfahren, insbesondere einen Kalmanfilter, verwendet werden.

Gemäß einer Ausgestaltung werden im Störgrößenschätzverfahren Istwerte des vom elektrischen Antrieb aufgebrachten Drehmoments und/oder der Drehzahl des elektrischen Antriebs verwendet bzw. ausgewertet. Istwerte des Drehmoments und/oder der Drehzahl des elektrischen Antriebs liegen typischerweise in der Invertersteuerung vor und können von dieser übermittelt oder, wenn das erfindungsgemäße Verfahren in der Invertersteuerung selbst implementiert wird, in dieser verwendet werden.

Gemäß einer Ausgestaltung werden beim Bestimmen der Stellwerte für die Stellgröße Ausgangswerte des inversen Streckenmodells beschränkt, um die Stellwerte zu bestimmen. Hierdurch können beispielsweise technisch nicht mögliche Werte für die Stellwerte oder situationsbedingt nicht mögliche Werte für die Stellwerte ausgeschlossen werden. Die Beschränkung, d.h. deren Höhe nach unten und/oder oben, kann insbesondere veränderbar sein, z.B. in Abhängigkeit von einem vom elektrischen Antrieb aufbringbaren Drehmoment, das etwa abhängig von einer Temperatur des elektrischen Antriebs sein kann.

Gemäß einer Ausgestaltung weist der Kompensationsregler einen Integral-Anteil auf, wobei Differenzwerte zwischen den Ausgangswerten und den beschränkten Stellwerten bestimmt werden und in einer ersten Anti-Windup-Funktion des Integral-Anteils verwendet werden. Die Anti-Windup-Funktion kann beispielsweise dergestalt implementiert sein, dass die Regelabweichung um den Differenzwert korrigiert bzw. verändert wird, d.h. der Differenzwert wird von der Regelabweichung abgezogen (wobei die Vorzeichen selbstverständlich geeignet festgelegt sind, so dass die Regelabweichung betragsmäßig verringert wird), und die korrigierte/veränderte Regelabweichung nach eventueller Multiplikation mit einem Integral-Faktor in einem Integrator des Integral-Anteils verwendet wird, wodurch letztendlich ein unbeschränktes Anwachsen des Integrals verhindert wird.

Gemäß einer Ausgestaltung weist der Kompensationsregler einen Integral-Anteil auf, wobei eine zweite Anti-Windup-Funktion des Integral-Anteils von den Ableitungswerten, insbesondere den Ableitungswerten der ersten zeitlichen Ableitung, abhängig ist. Insbesondere wird durch die zweite Anti-Windup-Funktion die Regelabweichung für den Integral-Anteil nach unten und/oder oben durch jeweilige zweite Beschränkungswerte beschränkt, wobei die zweiten Beschränkungswerte von den Ableitungswerten, insbesondere den Ableitungswerten der ersten zeitlichen Ableitung, abhängig sind, und/oder wird durch die zweite Anti-Windup-Funktion ein Integral-Faktor in Abhängigkeit von den Ableitungswerten, insbesondere den Ableitungswerten der ersten zeitlichen Ableitung, geändert. Dabei können die zweiten Beschränkungswerte und/oder der Integral-Faktor bei betragsmäßig größeren Ableitungswerten, insbesondere den Ableitungswerten der ersten zeitlichen Ableitung, betragsmäßig kleiner sein. Diese Ausgestaltung ist zweckmäßig, da so ein unerwünscht hohes Anwachsen des Integral-Anteils bei hohen Änderungsraten der vorgegebenen Sollwerte verhindert werden kann.

Eine erfindungsgemäße Recheneinheit, z.B. ein Steuergerät eines hydraulischen Systems einer mobilen Arbeitsmaschine oder eine Invertersteuerung eines elektrischen Antriebs, durch den eine Hydraulikmaschine eines hydraulischen Systems angetrieben wird, ist, insbesondere programmtechnisch, dazu eingerichtet, ein erfindungsgemäßes Verfahren durchzuführen. Auch ein hydraulisches Systems mit einer erfindungsgemäßen Recheneinheit ist Gegenstand der Erfindung.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1    zeigt ein hydraulisches System mit einer durch eine elektrische Maschine angetriebenen Konstantpumpe, das mit dem erfindungsgemäßen Verfahren betrieben werden kann.

Figur 2    zeigt ein Ablaufdiagramm gemäß einer beispielhaften Ausführungsform der Erfindung.

Figur 3    zeigt eine Regelungsstruktur gemäß einer beispielhaften Ausgestaltung der Erfindung.

Figur 4    illustriert eine Filterstruktur zur Bestimmung von Trajektorienwerte sowie zugehöriger Ableitungswerte aus vorgegebenen Sollwerten für die Zustandsgröße.

Figur 5    illustriert die Verwendung eines Störgrößenbeobachters bzw. Beobachters.

Figur 6    illustriert eine weitere Ausgestaltung, durch die insbesondere Überschwingen während transienter Übergänge mit sprunghaftem Verlauf bzw. mit großen Sollwert-Änderungsraten verringert wird.

Detaillierte Beschreibung der Zeichnung

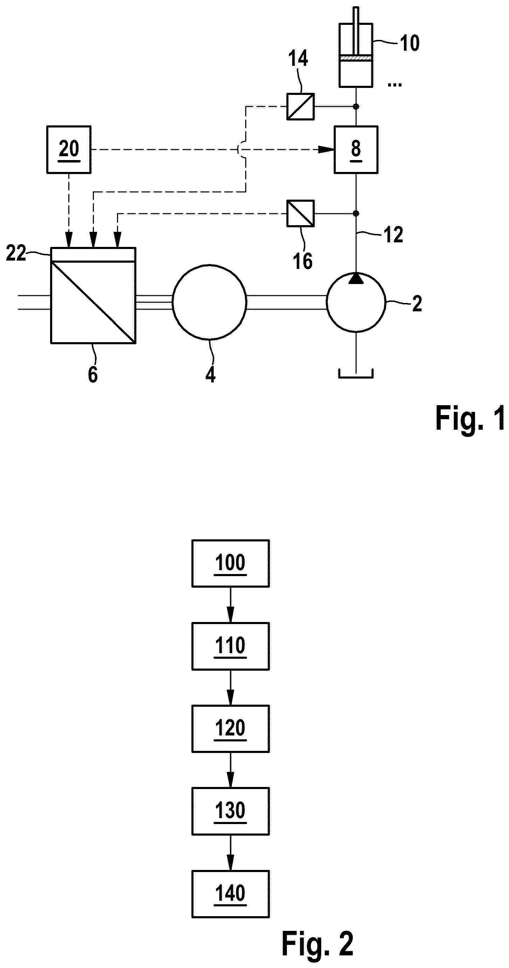

Figur 1 zeigt ein hydraulisches System bzw. elektro-hydraulisches System mit einer durch einen elektrischen Antrieb angetriebenen Hydraulikmaschine 2, die beispielsweise eine Konstantpumpe ist (d.h. eine Hydraulikpumpe mit konstanter Verdrängung $V_g$ bzw. konstantem Schluckvolumen, wobei Verdrängung das je Umdrehung geförderte Volumen bezeichnet), das mit dem erfindungsgemäßen Verfahren betrieben werden kann. Die Hydraulikmaschine und der elektrische Antrieb bilden zusammen ein Druckversorgungssystem bzw. Druckmittelversorgungssystem des hydraulischen Systems, durch das hydraulisches Druckmittel (Hydraulikflüssigkeit, insbesondere Hydrauliköl) im System bereitgestellt bzw. gefördert wird.

Die Hydraulikmaschine 2 (im Weiteren auch vereinfacht als Pumpe bezeichnet) weist zwei hydraulische

**EP 4 741 953 A1**

Anschlüsse auf, wobei einer der Anschlüsse, der als tankseitiger Anschluss bezeichnet wird, mit einem Tank für hydraulisches Druckmittel (Hydraulikflüssigkeit, insbesondere Hydrauliköl) verbunden ist und der andere der Anschlüsse, der als ausgangsseitiger Anschluss bezeichnet wird, über eine Hydraulikleitung 12 mit einer im Einzelnen nicht dargestellten Ventilanordnung 8 (z.B. einen modular aufgebauten Ventilblock) verbunden ist, mit welcher der Fluss an Druckmittel zu und von wenigstens einem hydraulischen Verbraucher 10 (hier beispielsweise ein Hydraulikzylinder) gesteuert werden kann. Die Ventilanordnung 8, d.h. darin umfasste Ventile bzw. Ventilschieber, wird durch ein Steuergerät 20 gesteuert, z.B. basierend auf Benutzereingaben, die von einer Bedieneinrichtung (z.B. einem Joystick; nicht dargestellt) erfasst werden und an das Steuergerät 20 übermittelt werden. Aus Benutzereingaben kann optional auch eine Volumenstromvorgabe und/oder Druckvorgabe (d.h. ein Volumenstromsollwert und/oder ein Pumpendrucksollwert) durch das Steuergerät 20 bestimmt werden.

An der hydraulischen Leitung zwischen der Ventilanordnung 8 und dem hydraulischen Verbraucher 10 kann ein Drucksensor (d.h. ein Sensor, der den Druck des Druckmittels misst), als Lastdrucksensor 14 bezeichnet, vorgesehen sein, mit dem der Lastdruck des hydraulischen Verbrauchers bzw. der maximale Lastdruck im Falle mehrerer hydraulischer Verbraucher erfasst bzw. gemessen werden kann. In einem System mit direkter Volumenstromvorgabe kann auf einen Lastdrucksensor verzichtet werden, wobei dann beispielsweise durch das Steuergerät 20 eine Volumenstrom- und/oder (Maximal-)Druckvorgabe bestimmt werden kann.

Ausgangsseitig der Hydraulikmaschine 2, d.h. am ausgangsseitigen Anschluss der Hydraulikmaschine bzw. an der Hydraulikleitung 12 zwischen Hydraulikmaschine 2 und Ventilblock 8, ist ein Drucksensor bzw. ein Pumpendrucksensor 16 vorgesehen. Der Pumpendrucksensor 16 misst den Pumpendruck, als der hier der ausgangsseitige Druck des Druckmittels, der am ausgangsseitigen Anschluss der Konstantpumpe bzw. an der Hydraulikleitung zwischen Konstantpumpe und Ventilanordnung vorliegt, betrachtet wird. Alternativ kann der Pumpendrucksensor direkt an der Hydraulikmaschine vorgesehen sein, etwa wenn diese einen dafür vorgesehenen Anschluss aufweist, an dem der Pumpendruck als hydraulisches Signal bereitgestellt wird.

Der elektrische Antrieb umfasst eine elektrische Maschine 4 und einen Inverter 6 (Stromrichter, insbesondere Wechselrichter), über den die elektrische Maschine 4 bzw. deren Phasenwicklungen mit elektrischen Wechselspannungen versorgt werden. Der Inverter 6 ist beispielsweise über einen Gleichstrom-Zwischenkreis mit einer elektrischen Energiequelle, etwa einer Batterie, verbunden. Die elektrische Maschine 4 ist mit der Hydraulikmaschine 2 mechanisch gekoppelt bzw. drehfest gekoppelt, z.B. mittels einer Welle, wobei zusätzlich ein Getriebe mit einer bestimmten Übersetzung vorgesehen sein kann. Die Drehzahl der Hydraulikmaschine 2 ist also gleich der Drehzahl der elektrischen Maschine 4 bzw. entspricht unter Berücksichtigung der Übersetzung der Drehzahl der elektrischen Maschine 4, d.h. das Verhältnis der beiden Drehzahlen ist gleich 1 oder gleich der Übersetzung.

Es ist eine Invertersteuerung 22 vorgesehen, die dazu eingerichtet ist, den Inverter 6 gemäß einer Stellgröße zu steuern, wobei die Stellgröße insbesondere das von der elektrischen Maschine 4 aufzubringende Drehmoment ist (das durch im Inverter erzeugte Wechselströme bedingt ist). Als Stellwerte bezeichnete Werte für die Stellgröße können an die Invertersteuerung 22 von einer übergeordneten Steuereinheit, etwa dem Steuergerät 20, welche die Stellwerte bestimmt, übermittelt werden oder, ganz oder teilweise, durch die Invertersteuerung 22 selbst bestimmt werden. Zur Bestimmung der zu verwendenden Stellwerte kann ein erfindungsgemäßes Verfahren durchgeführt werden, das in der Invertersteuerung 22 und/oder dem Steuergerät 20 implementiert wird.

Figur 2 zeigt ein Ablaufdiagramm gemäß einer beispielhaften Ausführungsform der Erfindung. Es ist ein Verfahren zur Bestimmung von Stellwerten einer Stellgröße für ein Druckmittelversorgungssystem eines hydraulischen Systems (wie es z.B. in Figur 1 gezeigt ist) dargestellt. Das hydraulische System weist wenigstens einen hydraulischen Verbraucher auf, der vom Druckmittelversorgungssystem mit Druckmittel versorgt wird. Das Druckmittelversorgungssystem weist eine Hydraulikmaschine und einen damit gekoppelten elektrischen Antrieb auf und wird mit der Stellgröße angesteuert.

Es wird vorausgesetzt, dass ein inverses Streckenmodell für das hydraulische System gegeben ist, das Werte einer zu regelnden Zustandsgröße (z.B. Druck oder Volumenstrom) des hydraulischen Systems und von zeitlichen Ableitungen der Zustandsgröße bis zu einer vorbestimmten Maximalordnung als Eingangswerte verwendet und diese auf einen Ausgangswert für die Stellgröße abbildet.

Die Schritte des Verfahrens werden wiederholt und fortlaufend durchgeführt, so dass sich die Verwendung des Plurals bei "Werten" (z.B. Sollwerte, Trajektorienwerte, Ableitungswerte, Stellwerte, Kompensationswerte und andere Werte) insbesondere darauf bezieht, das zeitliche Folgen solcher Werte vorliegen und verarbeitet werden. Es liegen als für verschiedene Zeitpunkte jeweilige Werte vor. Jeder Wert (für jede der Folgen) bezieht sich entsprechend auf einen Zeitpunkt. Der Ausdruck "Werte" kann also im Sinne von "eine zeitliche Folge von Werten, von den sich jeder auf einen Zeitpunkt bezieht" verstanden werden. Bei einer Implementierung des Verfahrens durch eine Recheneinheit (z.B. ein Steuergerät) ist die Menge der Zeitpunkte typischerweise diskret, z.B. eine Folge gleichbeabstandeter Zeitpunkte. Werden im Verfahren verschiedene Werte (verschiedener Folgen) miteinander verarbeitet, so werden dabei Werte (der verschiedenen Folgen) miteinander verarbeitet, die sich auf denselben Zeitpunkt beziehen. Der Begriff "Ableitungswerte" soll mehrere zeitliche Folgen einschließen, nämlich, soweit vorgesehen, für jede Ordnung zeitlicher Ableitungen jeweils eine zeitliche Folge von Ableitungswerten, d.h. es sind jeweils zeitliche Folgen von Ableitungswerten für die zeitliche Ableitung erster Ordnung, ... für die zeitliche Ableitung der Maximalordnung vorgesehen. Alternativ könnten die Begriffe "Ableitungswerte der ersten Ordnung", ... "Ableitungswerte der Maximalordnung" verwendet werden.

In einem optionalen Schritt 100 werden Sollwerte für die (zu regelnde) Zustandsgröße bestimmt. Dazu kann etwa ein Benutzersignal, das mit einer Benutzerschnittstelle (z.B. Joystick) erfasst ausgewertet werden, wobei verschiedene Höhen des Benutzersignals (z.B. entsprechend verschiedenen Auslenkungen des Joysticks) auf entsprechende Sollwerte für die Zustandsgröße abgebildet werden (etwa unter Einschluss einer Filterung und/oder einer progressiven Zuordnung). Auch könnten die Sollwerte für die Zustandsgröße durch eine übergeordnete Steuerung vorgegeben werden. Für die nachfolgenden Schritte wird davon ausgegangen, dass Sollwerte für die Zustandsgröße vorgegeben sind, d.h. eine Folge von Sollwerten, von denen sich jeder auf einen Zeitpunkt bezieht.

In Schritt 110 werden aus den vorgegebenen Sollwerten für die Zustandsgröße Trajektorienwerte einer Trajektorie für den zeitlichen Verlauf der Zustandsgröße und Ableitungswerte für zeitliche Ableitungen des Verlaufs der Zustandsgröße bestimmt, z.B. mit einem Zustandsvariablenfilter. Dabei werden die zeitlichen Ableitungen bis zu der Maximalordnung bestimmt, die im inversen Streckenmodell auftritt.

In Schritt 120 werden aus einer Regelabweichung, d.h. aus Regelabweichungswerten, zwischen den Trajektorienwerten und Istwerten der Zustandsgröße Kompensationswerte mit einem Kompensationsregler bestimmt. Die Regelabweichung ist insbesondere die Differenz zwischen den Trajektorienwerten und den Istwerten der Zustandsgröße (d.h. Trajektorienwert minus Istwert, jeweils auf den gleichen Zeitpunkt bezogen). Die Istwerte der Zustandsgröße werden von einem Sensor (z.B. einem Pumpendrucksensor) gemessen und übermittelt (z.B. an eine Recheneinheit, die das Verfahren implementiert).

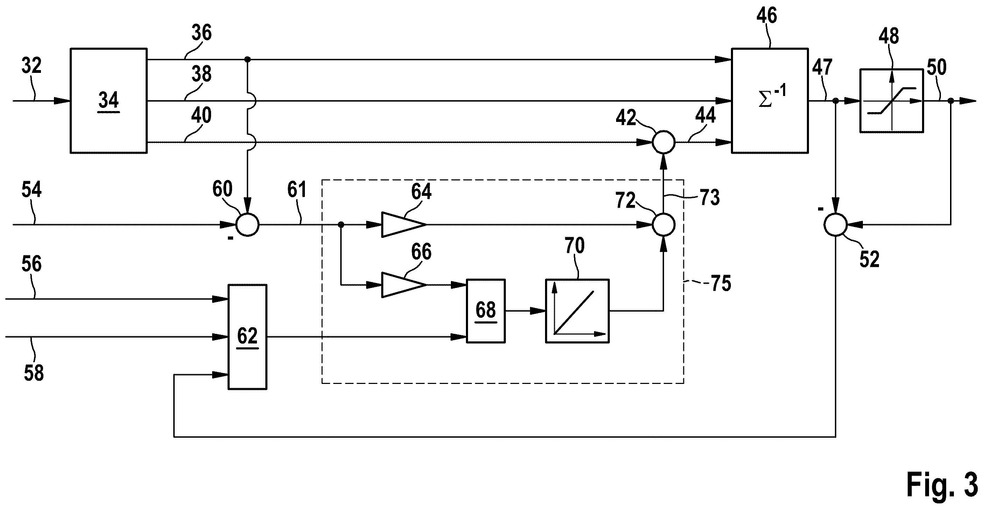

In Schritt 130 werden Stellwerte für die Stellgröße unter Verwendung des inversen Streckenmodells aus den Trajektorienwerten, den Ableitungswerten und den Kompensationswerten bestimmt. Dabei werden die Trajektorienwerte und die Ableitungswerte, in eventuell basierend auf den Kompensationswerten geänderter Form (etwa können die Ableitungswerte der Maximalordnung durch die Kompensationswerte geändert werden, wie etwa in den Figuren 3, 5 und 6 gezeigt), als Eingangswerte des inversen Streckenmodells verwendet. Die Ausgangswerte des inversen Streckenmodells können direkt als Stellwerte verwendet werden oder können in modifizierter bzw. geänderter Form als Stellwerte verwendet werden (etwa kann eine Beschränkung vorgesehen sein, wie in Figur 3 gezeigt).

In einem optionalen Schritt 140 wird der elektrische Antrieb mit den Stellwerten angesteuert oder die Stellwerte werden an eine übergeordnete Regelung oder Steuerung übermittelt bzw.

in einer solchen verwendet, welche unter Verwendung der Stellwerte letztendliche Stellwerte bestimmt, mit denen der elektrische Antrieb angesteuert wird. Die übergeordnete Regelung oder Steuerung kann etwa eine weitere Änderung der Stellwerte implementieren oder es kann sich um eine ablösende Regelung handeln, wobei durch das erfindungsgemäße Verfahren ein Regler von mehreren parallelen Reglern, aus deren jeweilig bestimmten (möglichen) Stellwerten einer als letztendlicher Stellwert ausgewählt wird. In einer ablösenden Regelung könnten die in Schritt 130 bestimmten Stellwerte etwa als mögliche Stellwerte angesehen werden, die aus mehreren, von verschiedenen Reglern bestimmten möglichen Stellwerten zeitweise ausgewählt werden können.

Die nachfolgenden Figuren 3 bis 6 illustrieren weitere Einzelheiten und Ausgestaltungsmöglichkeiten insbesondere der Schritte 110 bis 130.

Figur 3 zeigt eine Regelungsstruktur gemäß einer beispielhaften Ausgestaltung der Erfindung. Die Regelungsstruktur wird am Beispiel eines Druckreglers beschrieben, ist prinzipiell jedoch auch für einen Regler, der eine andere Zustandsgröße regelt, anwendbar, z.B. für einen Volumenstrom oder eine Drehzahl.

Es wird davon ausgegangen, dass Sollwerte 32 für die zu regelnde Zustandsgröße vorgegeben sind, z.B. durch eine übergeordnete Steuerung. Diese vorgegebenen Stollwerte 32 variieren im Allgemeinen mit der Zeit.

Kern ist dabei das invertierte Streckenmodell 46 des betrachteten Systems, das als Vorsteuerung dient. Das inverse Streckenmodell 8 besitzt einen Eingang für Werte der zu regelnden Zustandsgröße, wobei eine zeitliche Folge von Werten der Zustandsgröße, d.h. eine Sollwerttrajektorie bzw. Trajektorie der Zustandsgröße, gegebenen ist, so dass die Werte der zu regelnden Zustandsgröße am Eingang des inversen Streckenmodells auch als Trajektorienwerte 36 bezeichnet werden. Weitere Eingänge sind für zeitliche Ableitungen 38 und 40 bzw. 44 der zu regelnden Zustandsgröße, d.h. der Trajektorie, wobei die Anzahl der Ableitungen aus der Ordnung des Differentialgleichungssystems hervorgeht, durch das das System beschrieben wird. Die Ordnung der höchsten Ableitung wird als Maximalordnung bezeichnet. Durch das inverse Streckenmodell 46 werden (aus den Werten an den Eingängen) Werte 47 für die Stellgröße (bezugnehmend auf Figur 1 etwa für das vom elektrischen Antrieb aufzubringende Drehmoment) bestimmt.

In dem Fall der Druckregelung ist die Zustandsgröße der Pumpendruck. Ein Zustandsvariablenfilter 34 dient zum einen zur Filterung der vorgegebenen Sollwerte 32 der Zustandsgröße, und zum anderen zur Bestimmung bzw. Berechnung von zeitlichen Ableitungen der Trajektorie bzw. von als Ableitungswerte bezeichneten Werten für die zeitlichen Ableitungen. Im dargestellten Beispiel sind dies Ableitungswerte 38 einer ersten zeitlichen Ableitung und Ableitungswerte 40 einer zweiten zeitlichen Ableitung.

Zudem besteht die Möglichkeit, Sollwerte 32 an eine mögliche Stellgrößenbeschränkung anzupassen, beispielsweise so dass vor allem bei transienten Vorgängen der Anteil der Vorsteuerung besser ausgenutzt wird und zudem eine geringere Regelabweichung entsteht, welche im Fall eines PI-Reglers (Regler mit Proportionalanteil 64 und Integralanteil 66, 70) ansonsten zu einem erhöhten Überschwingen der zu regelnden Zustandsgröße führen könnte. Da in der Regel nicht alle realen physikalischen Effekte korrekt in einem Modell abgebildet werden können (zumindest nicht mit endlichem Aufwand), können entsprechende, in dem inversen Streckenmodell 46 enthaltene Modellfehler zu einer Abweichung zwischen Sollvorgabe, d.h. Trajektorie, und Istwert führen. Zur Kompensation ist ein als Kompensationsregler 75 bezeichneter Regler vorgesehen, der in Figur 3 beispielhaft als PI-Regler implementiert ist.

Dabei wird an dem Differenzelement 60 die Regelabweichung 61 zwischen dem Trajektorienwert 36 und dem Istwert 54 des Drucks gebildet (die sich z.B. auf den gleichen Zeitpunkt beziehen bzw. zum Auswertezeitpunkt vorliegen) und über den PI-Regler (ein P-Regler, d.h. ein Regler mit Proportionalanteil, oder ein PID-Regler, d.h. ein Regler mit Proportionalanteil und Integralanteil und Differentialanteil, sind natürlich auch vorstellbar), bestehend aus einem P-Faktor 64 (Proportionalfaktor) und einem I-Faktor 66 (Integralfaktor) sowie dem eigentlichen Integrator-Element 70, wobei die beiden Anteile an eine Summationselement 72 addiert werden, ein Kompensationswert 73 berechnet und zu der zweiten Ableitung der Trajektorie, d.h. zu den Ableitungswerten 40, über das Summationselement 42 addiert und dem inversen Streckenmodell als Eingangsgröße 44 übergeben. Den Kompensationsanteil des Reglers der zweiten Ableitung (bzw. der höchsten Ableitung in generellen Fall) hinzuzuaddieren ist zweckmäßig, da die höchste Ableitung des Systemzustands auch immer eine direkte Beziehung zur Stellgröße aufweist. Alternativ ist auch eine Addition des Kompensationswerts zum vom inversen Streckenmodell 46 bestimmten Wert 47 für die Stellgröße möglich.

Eine Stellgrößenbeschränkung kann mit dem Limitierungselement 48 realisiert werden, durch das der Stellwert 50 für die Stellgröße beispielsweise als nach unten und nach oben beschränkter Wert aus dem vom inversen Streckenmodell 46 bestimmten Wert 47 für die Stellgröße bestimmt wird. Auch hier kann in Verbindung mit dem Differenzglied 52 eine Rückkopplung in den Integrator realisiert werden, so dass dessen Wert je nach verwendeter Anti-Windup Strategie nicht weiter ansteigen kann, sobald die berechneten Werte 47 für die Stellgrößen über oder unter den Limitierungen der Stellgröße liegen. Über ein Auswahl-Element 62 (insbesondere ein Minimum-Element) wird folgend diejenige Rückkopplung ausgewählt, bei welcher der Wert am höchsten ist, wodurch der I-Anteil entweder durch das Limitierungselement 48 oder aber durch die Signale an den Eingängen 56, 58 limitiert wird. Die in Figur 3 dargestellte Regelungsstruktur ist beispielswiese ein Regler von mehreren parallel angeordneten Reglern einer ablösenden Regelung. Dadurch kann der I-Anteil bei parallel angeordneten Reglern bei einer sich ablösenden Regelung ebenso limitiert werden (entsprechend den Signalen an den Eingängen 56, 58), wenn der Regler nicht aktiv ist bzw. die resultierende Stellgröße vorgibt. Wenn die dargestellte Regelstruktur nicht Teil einer ablösenden Regelung ist, kann auf das Auswahlelement 62 verzichtet werden. In Element 68 wird die Regelabeichung 61 bzw. die mit dem Integral-Faktor 66 multiplizierte Regelabweichung mit dem vom Auswahlelement 62 bestimmten Wert korrigiert bzw. angepasst, z.B., bei geeignet gewählten Vorzeichen, subtrahiert, dass der Wert, der in der Integrator-Element 70 integriert wird, betragsmäßig kleiner wird. Die hier dargestellten Rückführungen gelten insbesondere, wenn die Hydraulikmaschine als Betrieb als Pumpe betrieben wird. Sollte die Hydraulikmaschine bzw. Konstanteinheit als Motor betrieben und zu Zwecken der Regeneration genutzt werden, müsste die Drehrichtung bei der Auswahl der Rückkopplung zumindest im Drehzahlregler mitberücksichtigt werden, da hier auch negative Drehzahlen vorliegen können.

Um die Stellgröße mathematisch bestimmen und deren Wert innerhalb des inversen Streckenmodells ermitteln zu können, soll im Folgenden anhand der Druckregelung beispielhaft die Herleitung der Modellgleichungen gezeigt werden. Basierend auf der Annahme, dass die Konstantpumpe direkt von der elektrischen Maschine angetrieben wird (ohne dabei ein zwischen den beiden Komponenten angebrachtes Getriebe auszuschließen) und einen Volumenstrom in ein Kontrollvolumen (Pumpenleitung) fördert, kommen zur Beschreibung dieser beiden Effekte die folgenden Differentialgleichungen in Frage:

Für den Druckaufbau gilt (Gleichung 1):

$$C_H \cdot \dot{p} = \frac{V_g}{2\pi} \cdot \omega - Q_{Load}$$

Für den Geschwindigkeitsaufbau gilt (Gleichung 2):

$$J \cdot \dot{\omega} = T - \frac{V_g}{2\pi} \cdot p - k \cdot \omega$$

Dabei sind: p der Druck bzw. Pumpendruck, $C_H$ die hydraulische Kapazität der Pumpenleitung, $V_g$ das Schluckvolumen der Konstantpumpe, $Q_{Load}$ der von den hydraulischen Verbrauchern abgenommene Summenvolumenstrom, welcher im Folgenden als Störgröße bezeichnet wird, $J$ die gemeinsame Trägheit von Elektromaschine und Pumpe, $T$ das von der Elektromaschine aufzubringende Antriebsmoment bzw. Drehmoment (eigentliche Stellgröße), k ein geschwindigkeitsabhängiger Reibungsanteil und $\omega$ die Winkelgeschwindigkeit (Kreisfrequenz) bzw. die Drehzahl. Punkt über einer Größe symbolisieren wie üblich deren zeitliche Ableitung. Wird die erste dieser beiden Formeln nach $\omega$ umgestellt, einmal nach der Zeit abgeleitet und in die zweite Formel eingesetzt, ergibt sich umgestellt nach T der folgende Ausdruck zur Beschreibung der Stellgröße (Gleichung 3):

$$T = \frac{2\pi J C_H}{V_g}\ddot{p} + \frac{2\pi k C_H}{V_g}\dot{p} + \frac{V_g}{2\pi}p + \frac{2\pi}{V_g}\dot{Q}_{Load} + \frac{2\pi k}{V_g}Q_{Load}$$

An dieser Gleichung ist erkennbar, warum auch die entsprechenden Ableitungen der Trajektorie benötigt werden, um vor allem auch bei den transienten Übergängen eine dynamische Vorsteuerung ermöglichen zu können. Es ist auch erkennbar, dass den zu Grunde gelegten Gleichungen Vereinfachungen innewohnen. So werden Leckagen und die Reibungseffekte der Pumpe nur unzureichend beschrieben, da diese in der Regel als Kennfelder vorliegen, deren Werte von den Zuständen Druck und Drehzahl abhängen. Es wird daher vorgeschlagen, die Gleichungen zur Bestimmung der Stellgröße T aus den Effizienzkennfeldern der Pumpe abzuleiten, welche zudem mögliche Nichtlinearitäten mitberücksichtigen können. Es gilt dann (Gleichung 4):

$$C_H \cdot \dot{p} = Q_{eff,Pmp}(p, \omega) - Q_{Load}$$

und (Gleichung 5):

$$J \cdot \dot{\omega} = T - T_{eff,Pmp}(p, \omega)$$

Um die Drehzahl bzw. die Kreisfrequenz $\omega$ zu bestimmen, wird die erste dieser Gleichungen nach $Q_{eff,Pmp}$, das ist der effektive Pumpenvolumenstrom abzüglich der Pumpenleckagen, umgestellt. Da $Q_{Load}$ in der Regel unbekannt ist, kann diese Größe auch zu null gesetzt werden und man erhält als effektiv notwendigen Pumpenvolumenstrom für die gewünschte Druckerhöhung das Produkt aus der hydraulischen Kapazität und dem derzeitigen Wert der ersten zeitlichen Ableitung der Trajektorie. Um die Drehzahl bzw. die entsprechende Kreisfrequenz zu erhalten, muss das Kennfeld $Q_{eff,Pmp}(p,\omega)$ jedoch vorab invertiert und z.B. auf dem Steuergerät implementiert werden. Mit dem so ermittelten Kennfeld $\omega(p, Q_{eff,Pmp})$ kann mit der Vorgabe des gewünschten Drucks und des für dessen Aufbau notwendigen Differenzvolumenstroms die Drehzahldifferenz ermittelt werden, um den gewünschten Druckanstieg zu realisieren. Diese Drehzahldifferenz kann folgend mit der gemessenen Ist-Drehzahl abhängig von dem Vorzeichen der ersten Sollwertableitung addiert und im weiteren Verlauf für das Bestimmen aller noch folgenden Werte aus den notwendigen weiteren Kennfeldern genutzt werden. In diesem Fall handelt es sich jedoch nicht mehr um eine reine Vorsteuerung, da die tatsächliche Ist-Geschwindigkeit verwendet wird. Als eine Alternative wird vorgeschlagen, die ermittelten Drehzahldifferenzen in Abhängigkeit des Vorzeichens der ersten Ableitung der Trajektorie aufzusummieren und somit eine angenäherte Sollgeschwindigkeit bzw. Sollkreisfrequenz zu erhalten.

Nach dieser Umstellung der ersten Geleichung nach $\omega$, wird diese nach der Zeit abgeleitet und in die zweite Gleichung eingesetzt. Als Ergebnis für das Antriebsmoment der elektrischen Maschine als gesuchte Stellgröße ergibt sich die folgende Gleichung (Gleichung 6):

$$T = \frac{J}{\frac{\partial Q_{eff,Pmp(p,\omega)}}{\partial \omega}} \cdot \left( C_H \cdot \ddot{p} + \dot{Q}_{Load} - \frac{\partial Q_{eff,Pmp(p,\omega)}}{\partial p} \cdot \dot{p} \right) + T_{eff,Pmp}(p, \omega)$$

Die partiellen Ableitungen des Volumenstromkennfelds nach der Kreisfrequenz bzw. nach dem Druck können offline ermittelt und auf dem Steuergerät implementiert werden. Des Weiteren ist vorstellbar, dass nicht die genannten gemessenen Kennfelder sowie deren invertierte Kennfelder und/oder Ableitungskennfelder auf dem Steuergerät implementiert werden, sondern mit Hilfe entsprechender Daten generierte neuronale Netze implementiert werden. Hierdurch können Einsparungen bezüglich des Speicherbedarfs und/oder der Rechenzeit erreicht werden.

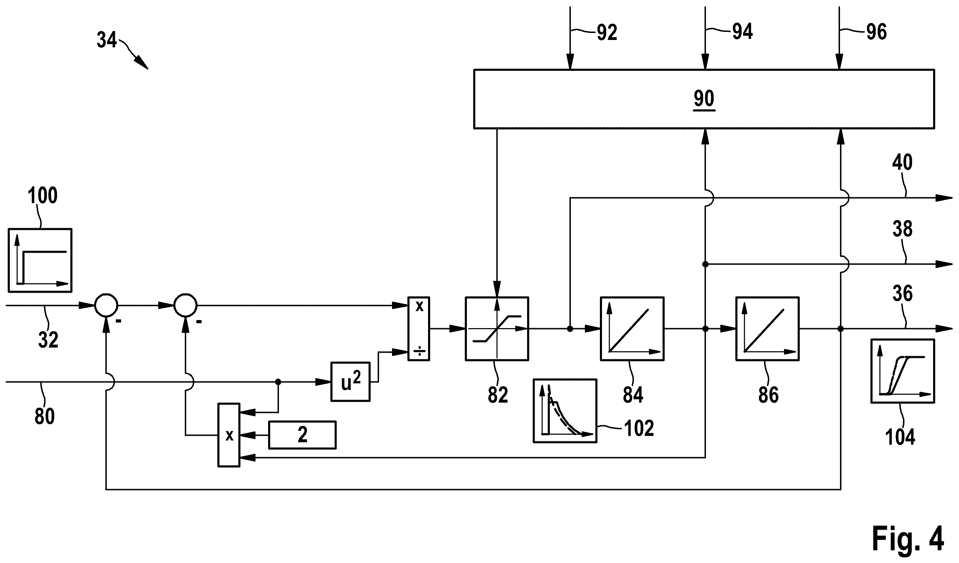

Figur 4 illustriert eine Filterstruktur, mit der Trajektorienwerte 36 sowie zugehörige Ableitungswerte 38, 40 aus Sollwerten 32 für die geregelte Zustandsgröße bestimmt werden können. Die dargestellte Filterstruktur ist ein Beispiel für einen Zustandsvariablenfilter 34, wie in Figur 3 gezeigt.

Das hier dargestellte Zustandsvariablenfilter ist dem Fachmann an sich bekannt und muss an dieser Stelle nicht zu detailliert erläutert werden. Basierend auf der folgenden Übertragungsfunktion zweier einfacher in Reihe geschalteter PT1-Filter (Gleichung 7)

$$p_{des,fil} = \frac{1}{\left(T_{fil} \cdot s + 1\right)^2} \cdot p_{des}$$

kann nach der Rücktransformation aus dem Laplace- in den Zeit-Raum die folgende Differentialgleichung für den Drucksollwert bestimmt werden (Gleichung 8):

$$\ddot{p}_{des,fil} = \frac{1}{T_{fil}^2} \cdot \left(p_{des} - p_{des,fil} - 2 \cdot T_{fil} \cdot \dot{p}_{des,fil}\right)$$

Dabei ist $p_{des}$ die Sollwert-Vorgabe für den Druck, die z.B. durch die Sollwerte 32 der Figuren 3, 4 gegeben ist, $p_{des,fil}$ ist die gefilterte Sollwert-Vorgabe, entsprechend der Trajektorie, und $T_{fil}$ ist die Zeitkonstante bzw. Filterkonstante 80 des PT1-Filters.

Die somit erhaltene Differentialgleichung ist in dem Signalflussbild der Figur 4 abgebildet. Es wird nach den entsprechenden Rückführungen der durch die Integratorelemente 84, 86 integrierten Zustände und der Einbeziehung der Filterkonstante 80 ($T_{fil}$) die notwendige zweite zeitliche Ableitung der Trajektorie gebildet, welche durch die eigentliche Vorgabe der Sollwerte 32 realisiert werden soll. Mit Hilfe des beispielhaft vorgesehenen Limitierungselements 82 kann der Wert der Ableitung nach oben und unten begrenzt werden. Dies kann z.B. dafür genutzt werden, um die Generierung der Trajektorie inklusive der für die dynamische Vorsteuerung entsprechend notwendigen zeitlichen Ableitungen an die tatsächlich vorherrschenden Limitierungen der Stellgröße (hier Antriebsmoment der elektrischen Maschine) anzupassen. Dies kann in vorteilhafter Weise vor allem auch dann genutzt werden, wenn auf Grund von zu hohen thermischen Belastungen von Inverter und/oder elektrischer Maschine das abzugebende bzw. aufzunehmende (beim Verzögern des Antriebs oder im Regenerationsfall) Antriebsmoment begrenzt werden soll. Um die Limitierungen der zweiten zeitlichen Ableitung zu berechnen, wird im Funktionsmodul 90 beispielsweise die nach $\ddot{p}$ umgestellte obige Gleichung 3 für das Drehmoment T verwendet. Die Eingangsgrößen sind neben dem Drehmoment 92 oder einem von dem elektrischen Antrieb aufbringbaren Drehmoment die entsprechenden Zustände p und p sowie die (eigentlich unbekannten) Störgrößen $Q_{Load}$ und $\dot{Q}_{Load}$ (Verbraucher-Summenvolumenstrom 94 sowie dessen zeitliche Ableitung 96). T stellt das vorgegebene (dynamisch, z.B. abhängig von einer Temperatur des elektrischen Antriebs) limitierte Antriebsmoment dar, welches direkt von der Steuereinheit des Inverters zur Verfügung gestellt wird. Auch hier können wieder kennfeldbasierte Gleichungen zur Verbesserung der Regelgüte verwendet werden. Hierfür kann Gleichung 6 nach $\ddot{p}$ umgestellt und die bereits vorgestellten Eingangsgrößen eingesetzt werden.

In Figur 4 sind weiterhin zeitliche Verläufe für die Trajektorie (Trajektorienwerte 36)) und deren zweiter Ableitung (Ableitungswerte 40) dargestellt, wie sie durch den dargestellten Filter für einen Sprung der Vorgabe (Sollwerte 32) erhalten werden. Es sind ein Sollwert-Verlauf 100 der vorgegebenen Sollwerte, ein Ableitungs-Verlauf 102 der zweiten zeitlichen Ableitung der Trajektorie und ein Trajektorien-Verlauf 104 der Trajektorie dargestellt. Dabei ist zu erkennen, dass der im Sollwert-Verlauf 100 sprunghafte Übergang der Sollwerte im Trajektorien-Verlauf 104 in einen abgeflachten und steigen Übergang gewandelt ist. Die Zeitdauer dieses Übergangs im Trajektorien-Verlauf 104 ist insbesondere von der Filterkonstanten $T_{fil}$ abhängig, welche beispielsweise für ein konkret gegebenes hydraulisches System geeignet gewählt werden kann, z.B. ausreichend groß, so dass das hydraulische System technisch in der Lage ist, der Trajektorie tatsächlich zu folgen. Im Ableitungs-Verlauf 102 der zweiten zeitlichen Ableitung der Trajektorie und im Trajektorien-Verlauf 104 der Trajektorie sind weiterhin die Verläufe als gestrichelte Linien eingezeichnet, die ohne Limitierungselement 82 auftreten würden.

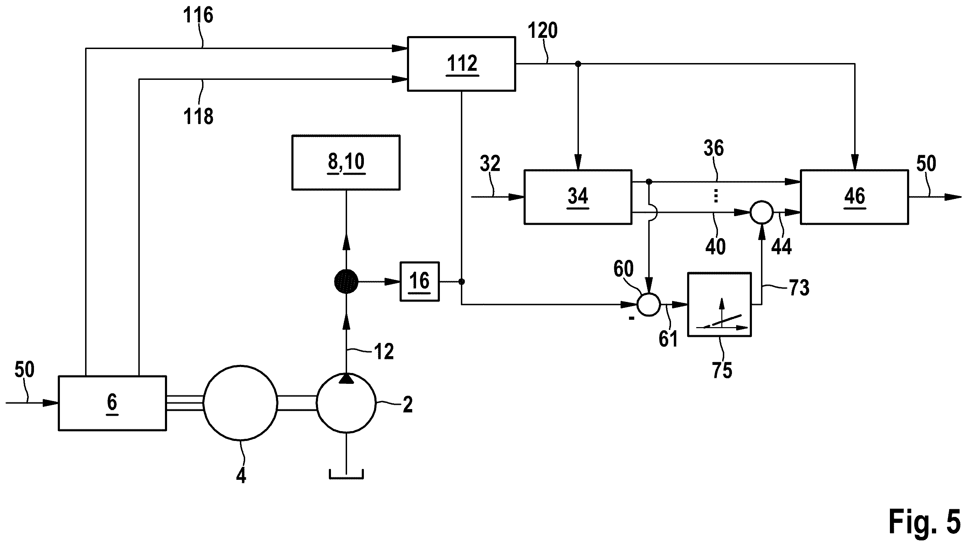

Figur 5 illustriert die Verwendung eines Störgrößenbeobachters bzw. Beobachters 112. Damit kann die Regelgüte vor allem im transienten Übergangsverhalten weiter erhöht werden.

Die Störgröße Verbraucher-Summenvolumenstrom $Q_{Load}$ ist normalerweise nicht messbar und stellt somit eine unbekannte Störgröße für die Vorsteuerung und die Regelung dar. Der hier verwendete Beobachter 112 bestimmt dabei die erste zeitliche Ableitung $\dot{Q}_{Load}$ der Störgröße.

In Figur 5 ist der Beobachter 112 im Zusammenhang mit bereits in den Figuren 1 und 3 dargestellten Elementen gezeigt, die in Figur 5 im Wesentlichen schematisch dargestellt sind. Für eine weitergehende Beschreibung dieser Elemente wird auf die Beschreibung der Figuren 1 und 3 verwiesen. Entsprechend Figur 1 ist eine Hydraulikmaschine 2 mit konstanter Verdrängung (z.B. Konstantpumpe) gezeigt, die durch einen elektrischen Antrieb angetrieben wird, der eine elektrische Maschine 4 und einen Inverter 6 umfasst, und die Druckmittel mittels einer Hydraulikleitung 12 (bzw. Pumpenkanal) zu einer Ventilanordnung 8 bzw. zum wenigstens einen hydraulischen Verbraucher 10 fördert. Ein Pumpendrucksensor 16 misst den Pumpendruck, d.h. den Druck des Druckmittels in der Hydraulikleitung 12. Entsprechend Figur 3 sind ein Zustandsvariablenfilter 34, ein inverses Streckmodell 46 und ein Kompensationsregler 75 gezeigt. Der Istwert 54 des Drucks (der als Beispiel für die geregelte Zustandsgröße dient) wird vom Pumpendrucksensor 16 an die Regelungsstruktur gemäß Figur 3 übermittelt, um daraus und aus den Trajektorienwerten 36 der Trajektorie die Regelabweichung für den Kompensationsregler 75 zu bestimmen. Der durch die Regelungsstruktur bestimmte Stellwert 50 wird wiederum zur Ansteuerung des Inverters 6 verwendet, wobei der Stellwert 50, wie dargestellt, direkt verwendet werden kann oder im Rahmen einer übergeordneten Regelung verwendet werden kann, z.B. einer ablösenden Regelung, in der ein letztendlich verwendeter Stellwert aus von mehreren parallelen Reglern bestimmten Stellwerten (von denen der Stellwert 50 einer ist) ausgewählt wird.

Der Störgrößenbeobachter 112 bestimmt beispielsweise aus den aktuellen Messwerten des Pumpendrucks (Istwert 54, gemessen durch den Pumpendrucksensor 16) sowie des Antriebsmoments 116 (indirekt bestimmbar aus dem Phasenstrom der elektrischen Maschine) und der Antriebsdrehzahl 118 (beide Größen werden z.B. von der Invertersteuerung des Inverters zur Verfügung gestellt) wie folgt die Störgröße $\dot{Q}_{Load}$, wobei von den obigen Gleichungen 1 und 2 ausgegangen wird.

Gleichung 1 wird nach der Zeit abgeleitet und Gleichung 2 anschließend in diese eingesetzt. Das Resultat nach $\dot{Q}_{Load}$ umgestellt (Gleichung 9):

$$\dot{Q}_{Load} = \frac{V_g}{2\pi J}\left(T_{meas} - k \cdot \omega_{meas} - \frac{V_g}{2\pi} \cdot p_{meas}\right) - C_H \cdot \ddot{p}_{meas}$$

Dabei sind: $p_{meas}$ der gemessene Pumpendruck, $T_{meas}$ das von der Invertersteuerung bestimmte und über-mittelte Antriebsdrehmoment und $\omega_{meas}$ die von der Invertersteuerung bestimmte und übermittelte Kreisfrequenz. Die Ableitungen von können $p_{meas}$ hierbei durch ein geeignetes Zustandsvariablenfilter 2. Ordnung bestimmt werden, so dass die Messgröße nicht direkt abgeleitet werden muss. Alternativ kann auch ein Luenberger Beobachter oder ein Kalman Filter verwendet werden. Zudem besteht die Möglichkeit, auch die kennfeldbasierten Gleichungen 4, 5 zur Bestimmung von $\dot{Q}_{Load}$ zu verwenden. Um Rauschen und Modellfehler zu kompensieren, kann das Ausgangssignal des Beobachters noch mit einem DT1-Glied gefiltert werden. Hierdurch werden mögliche Offsets eliminiert, ohne den eigentlichen Effekt bei vor allem dynamischen Änderungen der Störgröße zu reduzieren. Die beobachtete Störgröße 120 (d.h. hier $\dot{Q}_{Load}$) kann dem Zustandsvariablenfilter 34 und/oder dem inversen Streckenmodell 46 der Regelstrecke zur Verfügung gestellt werden. Eine zusätzliche Möglichkeit besteht darin, das inverse Modell 46 und den Störgrößenbeobachter 112 in einem Kalman-Filter zu integrieren und dann diesen als Modell der Strecke zu benutzen. Die berechnete Störgröße wirkt hierbei also nicht über den eigentlichen Kompensationsregler 75 sondern über die entsprechenden Elemente der dynamischen Vorsteuerung.

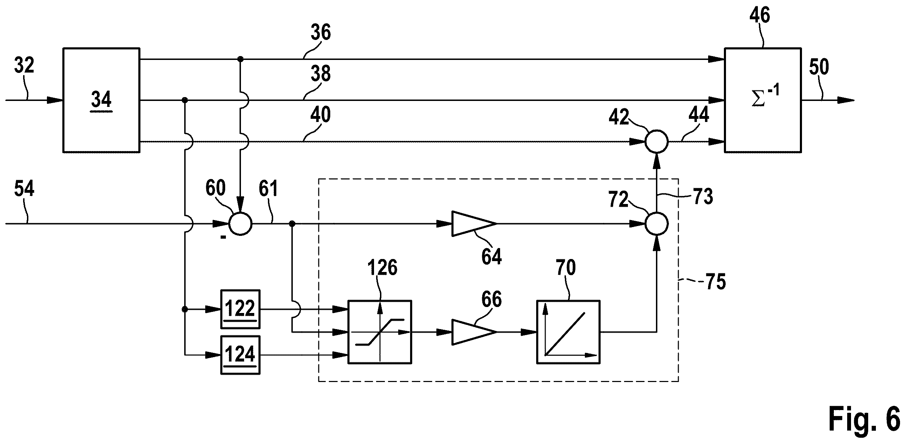

Figur 6 illustriert eine weitere Ausgestaltung, um Überschwingen während transienter Übergänge mit sprunghaftem Verlauf bzw. mit großen Sollwert-Änderungsraten, wie beispielsweise im Sollwert-Verlauf 100 der Figur 3, zu verringern. Dabei wird die erste zeitliche Ableitung der Trajektorie zur Beschränkung des I-Anteils verwendet.

Bei sprunghaften Sollwertänderungen können trotz Sollwertanpassung (durch den Zustandsvariablenfilter 34) Regelabweichungen entstehen, welche vor allem durch den I-Anteil in ihrer Wirkung verstärkt werden können und so zu Überschwingern der zu regelnden Zustandsgröße führen. Um diesem Problem zu begegnen kann die erste zeitliche Ableitung der Trajektorie, d.h. die Ableitungswerte 38, den Elementen 122 und 124 zugeführt werden. Diese können beispielsweise als parametrierbare Gleichungen oder aber als parametrierbare Kennfelder ausgeführt sein und geben in diesem Fall von der zeitlichen Ableitung der Trajektorie abhängige Werte zur Limitierung der im Differenzelement 60 berechneten Regelabweichung 61 vor. Die Limitierung kann über das Limitierungselement 126 erfolgen. Sollten zum Beispiel große Änderungsraten der Sollwerte vorherrschen, kann die Regelabweichung für den I-Anteil des Reglers auf deutlich kleinere Werte begrenzt werden, so dass die durch den I-Faktor 66 verstärkte Regelabweichung nicht zu einer zu starken Erhöhung des Stellgrößenanteils durch den Integrator 70 führt. Die Aufgabe des Integrators vor allem stationäre Regelabweichungen zu kompensieren, kann weiterhin uneingeschränkt erreicht werden, da in diesen Fällen die erste Ableitung der Trajektorie kleine Werte bis hin zu Null einnimmt. Des Weiteren in vorstellbar, dass auch höhere Ableitungen der Trajektorie für die Limitierung des I-Anteils verwendet werden können. In einer weiteren möglichen Ausführungsform wird kein Limitierungselement 126 verwendet, sondern der I-Faktor 66 direkt beeinflusst. Es wird also der I-Faktor 66 in Abhängigkeit von der ersten Ableitung der Trajektorie angepasst, wobei insbesondere bei (betragsmäßig) größer erster zeitlicher Ableitung der Trajektorie der I-Faktor 66 (betragsmäßig) kleiner ist. Auch hier ist vorstellbar, dass die Beeinflussung des I-Faktors 66 durch ein Kennfeld bestimmt wird, welches als Eingangsgröße wiederum die erste zeitliche Ableitung der Trajektorie besitzt.

**Patentansprüche**

1. Verfahren zur Bestimmung von Stellwerten einer Stellgröße für ein Druckmittelversorgungssystem eines hydraulischen Systems mit wenigstens einem hydraulischen Verbraucher (10), wobei das Druckmittelversorgungssystem eine Hydraulikmaschine (2) und einen damit gekoppelten elektrischen Antrieb (4, 6) aufweist und mit der Stellgröße angesteuert wird, wobei ein inverses Streckenmodell (47) für das hydraulische System gegeben ist, das Werte einer zu regelnden Zustandsgröße des hydraulischen Systems und von zeitlichen Ableitungen der Zustandsgröße bis zu einer vorbestimmten Maximalordnung als Eingangswerte verwendet und diese auf einen Ausgangswert für die Stellgröße abbildet;

das Verfahren umfassend:

- Bestimmen (110) von Trajektorienwerten (36) einer Trajektorie für den zeitlichen Verlauf der Zustandsgröße und von Ableitungswerten (38, 40) für zeitliche Ableitungen des Verlaufs der Zustandsgröße bis zu der Maximalordnung aus vorgegebenen Sollwerten (32) für die Zustandsgröße;
- Bestimmen (120) von Kompensationswerten (73) mit einem Kompensationsregler (75) aus einer Regelabweichung (61) zwischen den Trajektorienwerten (36) und Istwerten (54) der Zustandsgröße; und
- Bestimmen (130) von Stellwerten (50) für die Stellgröße unter Verwendung des inversen Streckenmodells (47) aus den Trajektorienwerten (36), den Ableitungswerten (38, 40) und den Kompensationswerten (73).

2. Verfahren nach Anspruch 1, wobei beim Bestimmen (130) der Stellwerte (50) für die Stellgröße die Ableitungswerte (40) der zeitlichen Ableitung mit der Maximalordnung durch die Kompensationswerte geändert werden, um geänderte Ableitungswerte (44) zu bestimmen; wobei die Trajektorienwerte (36), die Ableitungswerte (38) von zeitlichen Ableitungen mit einer Ordnung kleiner als die Maximalordnung und die geänderten Ableitungswerte (44) als Eingangswerte des inversen Streckenmodells (47) verwendet werden; wobei insbesondere die Kompensationswerte (73) zu den Ableitungswerten (40) der zeitlichen Ableitung mit der Maximalordnung addiert werden, um die geänderten Ableitungswerte (44) zu bestimmen.

3. Verfahren nach einem der vorstehenden Ansprüche, wobei beim Bestimmen (110) der Trajektorienwerte (36) und der Ableitungswerte (38, 40) ein Filter (34), dessen Ordnung gleich der Maximalordnung ist, verwendet wird, um aus den vorgegebenen Sollwerten (32) für die Zustandsgröße die Trajektorienwerte (36) und die Ableitungswerte zu bestimmen.

4. Verfahren nach Anspruch 3, wobei der Filter (34) eine Anzahl in Reihe geschalteter PT1-Filter umfasst oder als solcher ausgeführt ist, wobei die Anzahl gleich der Maximalordnung ist.

5. Verfahren nach einem der vorstehenden Ansprüche, wobei im inversen Streckenmodell (47) ein oder mehrere Kennfelder für die Hydraulikmaschine (2) verwendet werden; wobei insbesondere ein Volumenstrom-Kennfeld, das den von der Hydraulikmaschine geförderten Volumenstrom angibt und das von einem Druck und einer Drehzahl der Hydraulikmaschine (2) abhängig ist, und/oder ein Drehmoment-Kennfeld, das das an der Hydraulikmaschine (2) auftretende Drehmoment angibt und das von dem Druck und der Drehzahl der Hydraulikmaschine (2) abhängig ist, und/oder ein oder mehrere Kennfelder für die Ableitungen des Volumenstrom-Kennfelds und/oder des Drehmoment-Kennfelds nach dem Druck oder der Drehzahl und/oder ein oder mehrere invertierte Kennfelder, die jeweils nach dem Druck oder der Drehzahl aufgelöste Inverse des Volumenstrom-Kennfelds oder des Drehmoment-Kennfelds sind, verwendet wird bzw. werden.

6. Verfahren nach einem der vorstehenden Ansprüche, wobei beim Bestimmen (110) der Trajektorienwerte (36) und der Ableitungswerte (38, 40) die Ableitungswerte für eine der zeitlichen Ableitungen, insbesondere für diejenige mit der Maximalordnung, nach oben und/oder unten durch jeweilige erste Beschränkungswerte beschränkt werden.

7. Verfahren nach Anspruch 6, wobei die ersten Beschränkungswerte variiert werden und zwar in Abhängigkeit von den Trajektorienwerten (36) und/oder den Ableitungswerten, die nicht beschränkt werden, und/oder vom Istwert der Stellgröße und/oder von einem möglichen Wertebereich der Stellgröße und/oder von durch ein Störgrößenschätzverfahren bestimmten Schätzwerten wenigstens einer Störgröße, die eine unbeobachtete oder unbeobachtbare Größe im hydraulischen System ist; wobei die wenigstens eine Störgröße insbesondere einen Summenvolumenstrom des wenigstens einen Verbrauchers und/oder dessen zeitliche Ableitung einschließt.

8. Verfahren nach einem der vorstehenden Ansprüche, wobei durch ein Störgrößenschätzverfahren Schätzwerte für wenigstens eine Störgröße, die eine unbeobachtete oder unbeobachtbare Größe im hydraulischen System ist, bestimmt werden; und wobei die Schätzwerte für die wenigstens eine Störgröße beim Bestimmen der Trajektorienwerte und der Ableitungswerte und/oder im inversen Streckenmodell (47) verwendet werden; wobei die wenigstens eine Störgröße insbesondere einen Summenvolumenstrom des wenigstens einen Verbrauchers und/oder dessen zeitliche Ableitung einschließt.

9. Verfahren nach Anspruch 7 oder 8, wobei das Störgrößenschätzverfahren ein Beobachter (112), insbesondere einen Luenberger Beobachter, oder ein iteratives Schätzverfahren, insbesondere einen Kalmanfilter, verwendet.

10. Verfahren nach einem der Ansprüche 7 bis 9, wobei im Störgrößenschätzverfahren Istwerte des vom elektrischen Antrieb (2, 4) aufgebrachten Drehmoments (116) und/oder der Drehzahl (118) des elektrischen Antriebs verwendet bzw. ausgewertet werden.

11. Verfahren nach einem der vorstehenden Ansprüche, wobei beim Bestimmen (130) der Stellwerte für die Stellgröße Ausgangswerte (47) des inversen Streckenmodells (47) beschränkt werden, um die Stellwerte (50) zu bestimmen.

12. Verfahren nach Anspruch 11, wobei der Kompensationsregler (75) einen Integral-Anteil aufweist; wobei Differenzwerte zwischen den Ausgangswerten und den beschränkten Stellwerten (50) bestimmt werden und in einer ersten Anti-Windup-Funktion des Integral-Anteils verwendet werden.

13. Verfahren nach einem der vorstehenden Ansprüche, wobei der Kompensationsregler (75) einen Integral-Anteil aufweist; wobei eine zweite Anti-Windup-Funktion des Integral-Anteils von den Ableitungswerten (38, 40), insbesondere den Ableitungswerten (38) der ersten zeitlichen Ableitung, abhängig ist.

14. Verfahren nach Anspruch 13,

   wobei durch die zweite Anti-Windup-Funktion die Regelabweichung für den Integral-Anteil nach unten und/oder oben durch jeweilige zweite Beschränkungswerte beschränkt wird, wobei die zweiten Beschränkungswerte von den Ableitungswerten (38, 40), insbesondere den Ableitungswerten (38) der ersten zeitlichen Ableitung, abhängig sind; und/oder
   wobei durch die zweite Anti-Windup-Funktion ein Integral-Faktor in Abhängigkeit von den Ableitungswerten (38, 40), insbesondere den Ableitungswerten (38) der ersten zeitlichen Ableitung, geändert wird; und
   wobei insbesondere die zweiten Beschränkungswerte und/oder der Integral-Faktor bei betragsmäßig größeren Ableitungswerten (38, 40), insbesondere größeren Ableitungswerten (38) der ersten zeitlichen Ableitung, betragsmäßig kleiner sind.

15. Verfahren nach einem der vorstehenden Ansprüche, wobei die Stellgröße ein vom elektrischen Antrieb (4, 6) aufzubringendes Drehmoment oder eine Drehzahl des elektrischen Antriebs ist.

16. Verfahren nach einem der vorstehenden Ansprüche, wobei die Zustandsgröße ein Druck im hydraulischen System, insbesondere ein Druck an einem Anschluss der Hydraulikmaschine (2) oder einer mit dem Anschluss verbundenen hydraulischen Leitung (12) bzw. einem mit dem Anschluss verbunden hydraulischen Kanal, eine Drehzahl der Hydraulikmaschine oder ein von der Hydraulikmaschine geförderter Volumenstrom an Druckmittel ist.

17. Recheneinheit (20, 22) umfassend einen Prozessor, die so konfiguriert ist, dass sie das Verfahren nach einem der vorstehenden Ansprüche ausführt.

18. Hydraulisches System aufweisend ein Druckmittelversorgungssystem mit einer Hydraulikmaschine (2) und einem damit gekoppelten elektrischen Antrieb (4, 6) und eine Recheneinheit nach Anspruch 17, wobei ein inverses Streckenmodell (47) für das hydraulische System gegeben ist, das Werte einer zu regelnden Zustandsgröße des hydraulischen Systems und von zeitlichen Ableitungen der Zustandsgröße bis zu einer vorbestimmten Maximalordnung als Eingangswerte verwendet und diese auf einen Ausgangswert für die Stellgröße abbildet.

19. Computerprogramm umfassend Befehle, die bei der Ausführung des Programms durch die Recheneinheit des hydraulischen Systems nach Anspruch 18 diese veranlasst, das Verfahren nach Anspruch 1 bis 16 auszuführen.

20. Computerlesbarer Datenträger, auf dem das Computerprogramm nach Anspruch 18 gespeichert ist.

Fig. 1

Fig. 2

Fig. 3

EP 4 741 953 A1

Fig. 4

96  94  92

90

40  38  36

86  84  102  82  104

100  32  80  2

34

Fig. 5

EP 4 741 953 A1

Fig. 6

EP 4 741 953 A1

# EUROPÄISCHER RECHERCHENBERICHT

Europäisches Patentamt
European Patent Office
Office européen des brevets

Nummer der Anmeldung

EP 25 21 3058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 043127 A1 (BOSCH GMBH ROBERT [DE]) 29. April 2010 (2010-04-29) | 1,3,4,6, 11,15-20 | INV. G05B11/06 |
| A | * Absatz [0021] - Absatz [0057] * | 2,5, 7-10, 12-14 | G05B13/04 G05D16/20 |
| A | DE 10 2023 201086 A1 (BOSCH GMBH ROBERT [DE]) 14. August 2024 (2024-08-14) * Absatz [0003] - Absatz [0045] * ----- | 1-20 | ADD. F15B21/08 |
| A | DE 10 2020 213262 A1 (BOSCH GMBH ROBERT [DE]) 21. April 2022 (2022-04-21) * Absatz [0005] - Absatz [0033] * ----- | 1-20 | |
| A | DE 10 2022 211205 B3 (CONTINENTAL AUTOMOTIVE TECH GMBH [DE] ET AL.) 18. Januar 2024 (2024-01-18) * Absatz [0029] - Absatz [0062] * ----- | 1-20 | |

RECHERCHIERTE SACHGEBIETE (IPC)

G05B
F15B
G05D

Der vorliegende Recherchenbericht wurde für alle Patentansprüche erstellt

| Recherchenort | Abschlußdatum der Recherche | Prüfer |
|---|---|---|
| Den Haag | 25. März 2026 | Patsiopoulos, N |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 21 3058

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2026

| Im Recherchenbericht angeführtes Patentdokument | Datum der Veröffentlichung | Mitglied(er) der Patentfamilie | Datum der Veröffentlichung |
|---|---|---|---|
| DE 102008043127 A1 | 29-04-2010 | KEINE | |
| DE 102023201086 A1 | 14-08-2024 | KEINE | |
| DE 102020213262 A1 | 21-04-2022 | CN 114382754 A | 22-04-2022 |
| | | DE 102020213262 A1 | 21-04-2022 |
| | | EP 3988801 A1 | 27-04-2022 |
| | | US 2022120297 A1 | 21-04-2022 |
| DE 102022211205 B3 | 18-01-2024 | KEINE | |

EPO FORM P0461

Für nähere Einzelheiten zu diesem Anhang : siehe Amtsblatt des Europäischen Patentamts, Nr.12/82